# EUROPÄISCHE PATENTANMELDUNG

(11) **EP 0 877 469 A2**
(43) Veröffentlichungstag der Anmeldung: **11.11.1998**
(21) Anmeldenummer: 98108398.3
(22) Anmeldetag: 08.05.1998
(51) Int. Cl.: H02M 3/335

(54) **Schaltungsanordnung für einen Gleichspannungswandler**

(30) Priorität: 09.05.1997 DE 19719584
(71) Anmelder: Dipl.-Ing. Werner Nophut GmbH, 96191 Viereth (DE)
(72) Erfinder: Bohn, Dieter, Dipl.-Ing., 67117 Limburgerhof (DE)
(74) Vertreter: Hübner, Gerd, Dipl.-Phys.

(57) **Zusammenfassung**

Eine Schaltungsanordnung für einen Gleichspannungswandler ist versehen mit:
- einem Spannungseingang (1) zur Einspeisung einer Gleichspannung (UE),
- einem dem Eingang (1) primärseitig nachgeschalteten Übertrager (3), dessen Primärwicklung (2) in Reihe mit einem getakteten Schalttransistor (T1) zur Erzeugung einer Wechselspannung liegt,
- einem Taktgeber (4) zur getakteten Ansteuerung des Schalttransistors (T1),
- einer der Sekundärwicklung (5) des Übertragers (3) nachgeschalteten Gleichrichterschaltung (SD, 8) zur Gleichrichtung der vom Übertrager (3) übertragenen Wechselspannung und
- einem Spannungsausgang (7) zur Abgabe einer Ausgangs-Gleichspannung (UA).

Erfindungsgemäß ist vorgesehen, daß
- die Gleichrichterschaltung von mindestens einer Sendediode (SD, SD1, SD2, SD3, SD4) eines Optokopplers (OK, OK1, OK2, OK3, OK4) gebildet ist und
- der mindestens eine lichtgesteuerte Empfangstransistor (PT, PT1, PT2, PT3, PT4) dieses Optokopplers (OK, OK1, OK2, OK3, OK4) derart in den Taktgeber (4) im Primärkreis integriert ist, daß eine lichtgesteuerte Rückkopplung von der Sekundärseite des Übertragers (3) zu dessen Primärseite insbesondere zur leistungsbezogenen Ansteuerung des Schalttransistors (T1) erfolgt.

## Beschreibung

Die Erfindung betrifft eine Schaltungsanordnung für einen Gleichspannungswandler mit den im Oberbegriff des Anspruches 1 angegebenen Merkmalen.

Ein Gleichspannungswandler, der einen solchen Grundaufbau aufweist, ist z.B. aus der DE 34 41 631 C2 bekannt. Die detaillierte Ausführung dieses Gleichspannungswandlers weist darüber hinaus eine Steuereinrichtung auf, die an die Schalttransistoren der hier doppelt vorhandenen Umrichter Steuersignale mit geeigneter Phasendifferenz liefert und bei Auftreten von Überströmen die Schalttransistoren abschaltet. Die Steuereinrichtung verarbeitet dabei Eingangssignale, die - verallgemeinert gesprochen - von den Primär- und Sekundärströmen abhängig sind. Laut Aufgabenstellung in der DE 34 41 631 C2 soll damit eine Gleichspannungswandler geschaffen werden, der wenig Verlust aufweist, für unterschiedliche Eingangsspannungen geeignet ist, eine hohe Eingangsleistung besitzt, an die Schaltelemente keine hohen Spannungsanforderungen stellt, Schutz gegen Überströme aufweist und eine gleichmäßige Stromaufteilung in den Ausgangskreisen gewährleistet.

Die DE 44 17 785 A1 zeigt einen primärseitig modulierten Hochfrequenz-DC/DC-Spannungswandler, bei dem primärseitig eine Speicherdrossel als Bauelement einer Stromspiegelschaltung angeordnet ist, um eine hochfrequente Stromübertragung auf die galvanisch getrennte Sekundärseite zu erhalten. Damit soll z.B. eine Gleichspannung in ein Stromnetz eingespeist werden. Diese bekannte Schaltungsanordnung weist eine Spannungsregelrückführung auf, die zur galvanischen Trennung zwischen Sekundär- und Primärseite über Optokoppler in Rückkopplungszweig verfügen.

Zusammenfassend detektieren die bekannten Schaltungsanordnungen gemäß dem Stand der Technik den Sekundärstrom des Gleichspannungswandlers über besondere Wicklungen des Übertragers oder über die Spannung an dem Glättungskondensator auf der Sekundärseite. Die genannten Signale werden z.B. über Optokoppler auf die Primärseite zur Steuerung des dortigen Schalttransistors rückgekoppelt. Die beiden vorgenannten Varianten weisen den Nachteil auf, daß die Größe, die sie erfassen, veränderliche Phasenverschiebungen gegenüber der Eingangstaktfrequenz bzw. der Bürde aufweisen. Zum Teil verursachen die angesprochenen Rückkopplungsmaßnahmen selbst solche Phasenverschiebungen.

Phasenverschiebungen auf der Übertragungsstrecke zwischen dem Eingang und Ausgang der Wandleranordnung sind jedoch prinzipiell Ursache für eine mehr oder weniger starke Restwelligkeit von DC/DC-Wandlern, die für bestimmte Anwendungen - z.B. hochgenaue meßtechnische Aufgaben - nicht akzeptabel ist.

Der Erfindung liegt nun die Aufgabe zugrunde, eine konstruktiv einfache Schaltungsanordnung für einen Gleichspannungswandler anzugeben, die insbesondere für die Anwendung in der Analogtechnik eine stark verringerte Restwelligkeit der Ausgangsspannung mit sich bringt.

Das schaltungstechnische Lösungsprinzip ist im Kennzeichnungsteil des Anspruches 1 angegeben. Demnach ist die Gleichrichterschaltung auf der Sekundärseite des Übertrager von mindestens einer Sendediode eines Optokopplers gebildet. Der lichtgesteuerte Empfangstransistor dieses Optokopplers ist wiederum derart in den Taktgeber im Primärkreis integriert, daß eine lichtgesteuerte Rückkopplung von der Sekundärseite des Übertragers zu dessen Primärseite zur leistungsbezogenen Ansteuerung des Schalttransistors erfolgt. Der Kern der Erfindung liegt also darin, für die Gleichrichtung ein Bauelement - nämlich die genannte Sendediode - zu verwenden, das gleichzeitig ein Signal für die Rückkopplung zur Primärseite liefert. Prinzipbedingt erfolgt dabei auch eine galvanische Trennung. Da die Stärke des durch die Photodiode fließenden elektrischen Stroms und damit das Rückkopplungssignals von der Belastung des Wandlers abhängt, wird durch die angegebenen Rückkopplung ein sekundärseitiger Leistungsbedarf auf die primärseitige Steuerung des Übertragers signalisiert. Insbesondere erfolgt die Ansteuerung dessen Schalttransistors damit leistungsbezogen.

Zusammenfassend wird durch die erfindungsgemäße Grundstruktur der Rückkopplung der Ist-Zustand auf der Sekundärseite nahezu verzögerungsfrei und damit ohne Phasenverschiebungen auf die Primärseite rückgekoppelt, so daß die Hauptursache für die Restwelligkeit des Ausgangssignals praktisch vollständig ausgemerzt ist.

Bevorzugte Ausführungsformen sowie weitere Merkmale, Einzelheiten und Vorteile der Erfindung sind den Unteransprüchen und der nachfolgenden Beschreibung entnehmbar, in der Ausführungsbeispiele des Erfindungsgegenstandes anhand der beigefügten Zeichnungen näher erläutert werden. Es zeigen:
- Fig. 1: ein Prinzipschaltschild eines rückgekoppelten Gleichspannungswandlers,
- Fig. 2: ein Schaltbild eines rückgekoppelten Gleichspannungswandlers mit Brückengleichrichter in einer ersten Ausführungsform,
- Fig. 3: eine Multivibratorschaltung zur Ergänzung der Gleichrichterschaltung gemäß Fig. 1,
- Fig. 4: eine sekundärseitige Schaltungsergänzung für die Gleichrichterschaltung nach Fig. 1, und
- Fig. 5: ein Schaltbild eines rückgekoppelten Gleichspannungswandlers mit Brückengleichrichter in einer zweiten Ausführungsform.

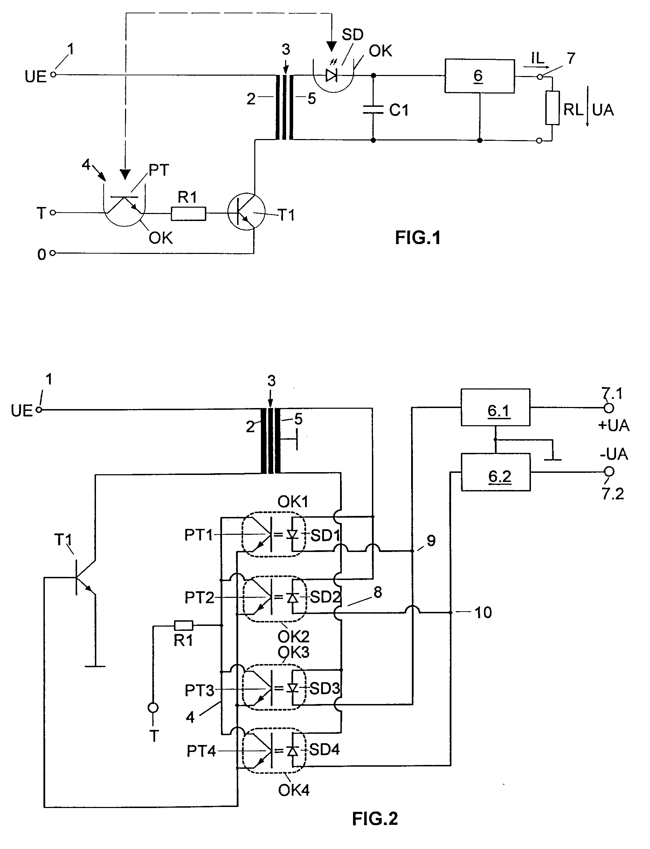

In Fig. 1 ist die Grundausführung einer erfindungsgemäßen Schaltungsanordnung zur Umwandlung einer beispielsweise positiven Eingangsspannung UE in eine Ausgangsspannung UA gezeigt. Die Eingangsspannung UE wird über den Spannungseingang 1 eingespeist, der mit dem ersten Abgriff der Primärwicklung 2 verbunden ist. Die Primärwicklung 2 ist mit der Kollektor-Emitter-Strecke eines npn-Schalttransistors T1 seriell zusammengeschaltet. Zur getakteten Ansteuerung des Schalttransistor T1 dient ein Taktgeber 4, der aus einer Serienschaltung eines Festwiderstandes R1 und einem veränderlichen Widerstand in Form der Kollektor-Emitter-Strecke eines photosensitiven Transistors PT1 besteht. Ein Taktimpuls wird also vom Takteingang T über die Serienschaltung aus der Kollektor-Emitter-Strecke des Transistors PT und dem Festwiderstand R1 an die Basis des Schalttransistors T1 geführt.

Der photosensitive Transistor PT bildet den lichtgesteuerten Empfangstransistor eines in Fig. 1 der Übersichtlichkeit halber aufgetrennt gezeichneten Optokopplers OK, dessen Sendediode SD mit der Sekundärwicklung 5 des Übertragers 3 verbunden ist. Die als Gleichrichterdiode arbeitende Sendediode SD führt die positive Halbwelle der an der Sekundärwicklung 5 des Übertragers 3 anstehenden Wechselspannung an eine Parallelschaltung aus einem Glättungskondensator C1 und einem Spannungsregler 6. An dessen Ausgang 7 kann die Ausgangsspannung UA des Gleichspannungswandlers abgegriffen werden. Bei Belastung mit einem Lastwiderstand RL fließt darüber der Laststrom IL.

Die Lichtstrecke zwischen der Sendediode SD und dem photosensitiven Transistor PT wirkt als Rückkopplung von der Sekundärseite des Übertragers 3 auf dessen Primärseite. Das Lichtsignal und das Maß der Rückkopplung ist dabei von der Größe des die Sendediode SD durchfließende Stromes abhängig, worüber wiederum der Widerstand des photosensitiven Transistors PT und damit über den Schalttransistor T1 der Eingangsstrom IE gesteuert wird. Die Größe des durch die Sendediode SD fließenden Stromes hängt dabei in erster Linie vom Ladezustand des Glättungskondensators C1 und dem durch die Bürde bestimmten, über den Regler 6 fließenden Laststrom IL ab. Bei geringer Ladung des Kondensators C1 und/oder bei kleinem Lastwiderstand RL fließt über die Sendediode D ein größerer Strom als bei hoher Ladung des Kondensators C1 bzw. bei großem Lastwiderstand RL. Über die Rückkopplung mittels des Optokopplers OK wird also ein sekundärseitiger Leistungsbedarf auf die primärseitige Steuerung des Übertragers 3 signalisiert, wodurch die Aussteuerung des Schalttransistors T1 leistungsbezogen erfolgt.

In Fig. 2 ist ein erweiterter Gleichspannungswandler gezeigt, der auf der Basis des anhand von Fig. 1 erläuterten Prinzips arbeitet, jedoch sekundärseitig einen Brückengleichrichter 8 aufweist. Dessen in üblicher Weise verschaltete Gleichrichter-Dioden sind wiederum als Sendedioden SD1 bis SD4 von Optokopplern OK1 bis OK 4 ausgebildet. Die Kollektor-Emitter-Strecken der photosensitiven Transistoren PT1 bis PT 4 sind parallel geschaltet. Ihre Kollektoren stehen über einen Festwiderstand R1 wiederum mit dem Takteingang T der Primärseite des Wandlers in Verbindung. Die Emitter der Transistoren PT1 bis PT4 sind mit der Basis des Schalttransistor P1 verbunden, so daß wiederum eine von der Sekundärseite rückgekoppelte Steuerung des Schalttransistors auf der Primärseite des Übertragers 3 erfolgt.

Im übrigen ist in Fig. 2 eine Brückengleichrichterschaltung 8 mit Mittelanzapfung gezeigt, deren beiden Abgriffe 9, 10 jeweils mit Spannungsreglern 6.1, 6.2 zur Erzeugung einer positiven bzw. negativen Ausgangsspannung +/- UA verbunden sind.

Das den Ausführungsformen nach Fig. 1 und 2 zugrundeliegende Regelverfahren eignet sich derzeit nur zur Übertragung relativ kleiner Leistungen bzw. Ströme, da die Sendedioden der verwendeten Optokoppler typischerweise nur bis 20 mA ausgelegt sind. Ferner hat der Schalttransistor bei geringer Leistungsabnahme durch die Bürde eine relativ hohe Verlustleistung aufzunehmen.

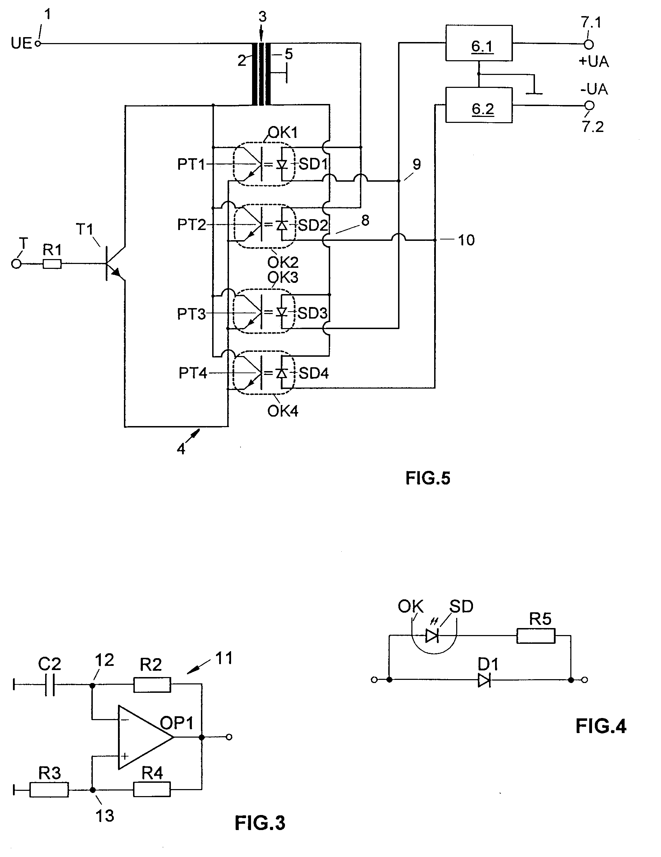

Zur Übertragung höherer Leistungen wird deshalb eine Erweiterung der erfindungsgemäßen Schaltungsanordnung vorgeschlagen, wie sie aus Fig. 3 deutlich wird. Mit Hilfe der dort dargestellten Multivibratorschaltung 11 kann der Schalttransistor T1 lastunabhängig und unter definierten, optimalen Betriebsbedingungen betrieben werden. Dabei wird über die Rückkopplung mit Hilfe der Optokoppler OK eine dem Strom über die Sendediode SD entsprechende Modulation der Taktfrequenz, mit der der Transistor T1 gesteuert wird, vorgenommen. Die Multivibratorschaltung 11 besteht dabei aus einem Operationsverstärker OP1, dessen invertierender Eingang mit dem Mittelabgriff 12 eines RC-Gliedes bestehend aus dem Kondensator C2 und dem Widerstand R2 verbunden ist. Sein nicht-invertierender Eingang ist mit dem Mittelabgriff 13 eines Spannungsteilers bestehend aus den Widerständen R3 und R4 verbunden. Der Ausgang des Operationsverstärkers OP1 ist über die beiden Widerstände R2 und R4 auf dem invertierenden bzw. nicht-invertierenden Eingang rückgekoppelt. Aufgrund dieser Schaltungsanordnung bestimmt das RC-Glied aus R2 und C2 die Zeitkonstante der Schwingung des Multivibrators. Das Verhältnis des Widerstandes R3 zur Summe der Widerstände (R3 + R4) legt die Schaltschwelle und damit die Hysterese des Multivibrators fest.

Eingebunden wird die in Fig. 3 dargestellte Multivibratorschaltung 11 in den Taktgeber 4 beispielsweise dadurch, daß die Kollektor-Emitter-Strecke des photosensitiven Transistors PT dem Widerstand R1 aus Fig. 1 parallel geschaltet wird und die Schwingfrequenz des Multivibrators 11 über die Schaltschwelle des Transistors PT moduliert wird. Eine Alternative zur Einbindung der Multivibratorschaltung liegt darin, die Serienschaltung aus der Kollektor-Emitter-Strecke des Transistors PT und dem Widerstand R1 zur Steuerung des Ladestroms des Kondensators C2 anstelle des Widerstandes R2 in den Rückkopplungskreis des Operationsverstärkers OP1 einzufügen.

Die vorstehenden Maßnahmen zur Leistungserhöhung sind auch auf der Sekundärseite des Übertragers 3 in Betracht zu ziehen. Es müssen dazu Gleichrichter-Dioden entsprechender Leistung eingesetzt werden, wobei Photodioden in ihrer Leistung eben begrenzt sind. Um die erfindungsgemäße Schaltungsanordnung auch für höhere Leistungen einsetzen zu können, wird nun die Sendediode SD in der Schaltung gemäß Fig. 1 durch eine Parallelschaltung aus einer üblichen Gleichrichterdiode D1 und der Serienschaltung aus der Sendediode SD und dem Festwiderstand R5 ersetzt, wie dies in Fig. 4 dargestellt ist. Die Gleichrichterdiode D1 stellt also gleichermaßen eine By-Pass-Diode dar.

In Fig. 5 ist eine alternative Ausführungsform der in Fig. 2 gezeigten Wandlerschaltung dargestellt. Zur Vermeidung von Wiederholungen sind dabei übereinstimmende Bauteile mit identischen Bezugszeichen versehen und bedürfen keiner nochmaligen ausführlichen Erläuterung. Es genügt vielmehr, auf die schaltungstechnischen Unterschiede zur Fig. 2 und die mit diesem Ausführungsbeispiel erreichbaren Vorteile einzugehen.

Die Kollektor-Emitter-Strecken der photosensitiven Transistoren PT1 bis PT4 sind analog Fig. 2 parallel geschaltet. Diese Parallelschaltung liegt selbst wiederum parallel zur Kollektor-Emitter-Strecke des Schalttransistors T1 des Taktgebers 4.

Durch diese Parallelschaltung werden die Kollektor-Emitter-Strecken der photosensitiven Transistoren PT1 bis PT4 um die Ansprechzeit der Optokoppler OK1 bis OK4 verzögert geschaltet. Sind die Kollektor-Emitter-Strecken der photosensitiven Transistoren PT1 bis PT4 zur Kollektor-Emitter-Strecke des Schalttransistors T1 parallel geschaltet, so erfolgt die Schaltung des Stroms durch die Primärwicklung 2 gemäß der Ansprechverzögerung der Optokoppler OK1 bis OK 4 in Stufen und deshalb ebenfalls verzögert. Dies bedeutet, daß die durch die Selbstinduktion erzeugte Überspannung, die der zeitlichen Änderung des Stromes proportional ist, deutlich geringer wird als bei einer Stromschaltung ausschließlich durch den Schalttransistor, wie es im Ausführungsbeispiel gemäß der Fig. 2 realisiert ist. In dieser Ausführungsform wird das potentielle Leistungsvermögen der Transistoren PT1 bis PT4 nämlich nur zu einem geringen Teil beansprucht, wobei der Schalttransistor insbesondere bei geringer Leistungsabnahme am Ausgang des Wandlers in Arbeitspunkten betrieben wird, die deutlich außerhalb des Optimums liegen können. Eine hohe Betriebstemperatur des Schalttransistors T1 kann daher die Folge sein.

Demgegenüber besitzen die Kollektor-Emitter-Strecken der Optokoppler Ok1 bis OK4 eine wesentlich geringere Sättigungsspannung als der Schalttransistor T1 und nehmen somit bei gleichem Strom eine deutlich geringere Verlustleistung auf als dieser. Zudem wird die der Überspannung beim Abschalten des Schalttransistors T1 entsprechende Energie nicht in Wärme umgesetzt, sondern hauptsächlich als Nutzenergie auf die Sekundärseite des Wandlers übertragen. Damit steigt der Wirkungsgrad der gesamten Schaltung beträchtlich und die beteiligten Bauteile entwickeln eine geringere Übertemperatur.

Zusammenfassend wird bei der Schaltung gemäß Fig. 5 eine geringere Verlustleistung verursacht, da die Sättigungsspannung der Kollektor-Emitter-Strecken der Optokoppler sehr gering ist und sie eine kleinere, durch Selbstinduktion verursachte Überspannung hervorrufen. Aufgrund dieser vorteilhaften Merkmale erlaubt die Schaltung ein Übertragen und Schalten eines wesentlich breiteren Leistungsbereiches bei gleichen Bauelementen.

## Patentansprüche

1. Schaltungsanordnung für einen Gleichspannungswandler mit:
- einem Spannungseingang (1) zur Einspeisung einer Gleichspannung (UE),
- einem dem Eingang (1) primärseitig nachgeschalteten Übertrager (3), dessen Primärwicklung (2) in Reihe mit einem getakteten Schalttransistor (T1) zur Erzeugung einer Wechselspannung liegt,
- einem Taktgeber (4) zur getakteten Ansteuerung des Schalttransistors (T1),
- einer der Sekundärwicklung (5) des Übertragers (3) nachgeschalteten Gleichrichterschaltung (SD, 8) zur Gleichrichtung der vom Übertrager (3) übertragenen Wechselspannung und
- einem Spannungsausgang (7) zur Abgabe einer Ausgangs-Gleichspannung (UA),
**dadurch gekennzeichnet, daß**
- die Gleichrichterschaltung von mindestens einer Sendediode (SD, SD1, SD2, SD3, SD4) eines Optokopplers (OK, OK1, OK2, OK3, OK4) gebildet ist und
- der mindestens eine lichtgesteuerte Empfangstransistor (PT, PT1, PT2, PT3, PT4) dieses Optokopplers (OK, OK1, OK2, OK3, OK4) derart in den Taktgeber (4) im Primärkreis integriert ist, daß eine lichtgesteuerte Rückkopplung von der Sekundärseite des Übertragers (3) zu dessen Primärseite insbesondere zur leistungsbezogenen Ansteuerung des Schalttransistors (T1) erfolgt.

2. Schaltungsanordnung nach Anspruch 1, **dadurch gekennzeichnet, daß** der Taktgeber (4) mindestens einen lichtgesteuerten Empfangstransistor (PT, PT1, PT2, PT3, PT4) aufweist, der mit seiner Kollektor-Emitter-Strecke in Reihe mit einem Festwiderstand (R1) der Basis des Schalttransistors (T1) vorgeschaltet ist.

3. Schaltungsanordnung nach Anspruch 1 oder 2, **dadurch gekennzeichnet, daß** die an der Sekundärwicklung (5) des Übertragers (3) anstehende Wechselspannung über die mindestens eine in Reihe zur Sekundärwicklung (5) geschaltete Sendediode (SD, SD1, SD2, SD3, SD4) an eine Parallelschaltung aus einem Glättungskondensator (C1) und einem Spannungsregler (6, 6.1, 6.2) geführt ist.

4. Schaltungsanordnung nach einem der Ansprüche 1 bis 3, **dadurch gekennzeichnet, daß** die sekundärseitige Gleichrichterschaltung ein Brückengleichrichter (8) ist, dessen vier Gleichrichter-Dioden jeweils von den Photodioden (SD1, SD2, SD3, SD4) von Optokopplern (OK, OK1, OK2, OK3, OK4) gebildet sind, deren lichtgesteuerte Empfangstransistoren (PT1, PT2, PT3, PT4) in Parallelschaltung im Taktgeber (4) für den primärseitigen Schalttransistor (T1) angeordnet sind.

5. Schaltungsanordnung nach einem der Ansprüche 1 bis 4, **dadurch gekennzeichnet, daß** mittels der Rückkopplung über den mindestens einen Optokoppler (OK, OK1, OK2, OK3, OK4) eine lastabhängige Modulation der Taktfrequenz des Taktgebers (4) erfolgt.

6. Schaltungsanordnung nach Anspruch 5, **dadurch gekennzeichnet, daß** für die Modulation eine an sich bekannte Multivibratorschaltung (11) eingesetzt ist.

7. Schaltungsanordnung nach Anspruch 6, **dadurch gekennzeichnet, daß** der mindestens eine lichtgesteuerte Empfangstransistor (PT) des Optokopplers (OK) im Rückkopplungszweig der Multivibratorschaltung (11) angeordnet ist.

8. Schaltungsanordnung nach einem der Ansprüche 1 bis 7, **dadurch gekennzeichnet, daß** zur Übertragung größerer Leistungen die mindestens eine Photodiode (SD) im Sekundärkreis durch einen in Reihe dazu geschalteten Festwiderstand (R5) sowie eine parallel zu dieser Reihenschaltung angeordnete By-Pass-Gleichrichterdiode (D1) ergänzt ist.

9. Schaltungsanordnung nach Anspruch 1, **dadurch gekennzeichnet, daß** der Taktgeber (4) mindestens einen lichtgesteuerten Empfangstransistor (PT1, PT2, PT3, PT4) aufweist, dessen Kollektor-Emitter-Strecke parallel zur Kollektor-Emitter-Strecke des Schalttransistors (T1) geschaltet ist.

10. Schaltungsanordnung nach Anspruch 4 und 8, **dadurch gekennzeichnet, daß** die lichtgesteuerten Empfangstransistoren (PT1, PT2, PT3, PT4) in Parallelschaltung zueinander wiederum parallel zur Kollektor-Emitter-Strecke des Schalttransistors (T1) angeordnet sind.
